# EUROPÄISCHE PATENTSCHRIFT

(11) **EP 0 961 874 B1**
(45) Veröffentlichungstag und Bekanntmachung des Hinweises auf die Patenterteilung: **14.08.2002**
(21) Anmeldenummer: 98906916.6
(22) Anmeldetag: 04.02.1998
(51) Int. Cl.: F02D 31/00, F02D 41/08

(54) **ANTRIEBSSYSTEM, INSBESONDERE FÜR EIN KRAFTFAHRZEUG UND VERFAHREN ZUM ENTGEGENWIRKEN EINER ÄNDERUNG DER LEERLAUFDREHZAHL IN EINEM ANTRIEBSSYSTEM**
PROPULSION SYSTEM, ESPECIALLY AUTOMOTIVE, AND METHOD FOR FRUSTRATING A CHANGE OF THE IDLING SPEED IN SUCH A SYSTEM
SYSTEME DE PROPULSION, NOTAMMENT AUTOMOBILE, ET MOYEN DE CONTRECARRER UNE MODIFICATION DU REGIME DE RALENTI DANS UN SYSTEME DE PROPULSION

(30) Priorität: 04.02.1997 DE 19704153
(43) Veröffentlichungstag der Anmeldung: 08.12.1999
(73) Patentinhaber: Continental ISAD Electronic Systems GmbH & Co. oHG, 86899 Landsberg/Lech (DE)
(72) Erfinder: PELS, Thomas, D-77855 Achern (DE); REVERMANN, Klaus, D-26835 Schwerinsdorf (DE); ZEYEN, Klaus-Peter, D-50670 Köln (DE)
(74) Vertreter: Lippich, Wolfgang, Dipl.-Pys., Dr.rer.nat.
(86) Internationale Anmeldenummer: EP9800608
(87) Internationale Veröffentlichungsnummer: WO9834022

(56) Entgegenhaltungen:
- DE-A- 4 108 751
- DE-A- 4 325 505
- US-A- 5 270 575
- PATENT ABSTRACTS OF JAPAN vol. 018, no. 563 (M-1693), 27.Oktober 1994 & JP 06 200781 A (ISUZU MOTORS LTD;OTHERS: 01), 19.Juli 1994,
- PATENT ABSTRACTS OF JAPAN vol. 018, no. 183 (M-1584), 29.März 1994 & JP 05 340282 A (SUZUKI MOTOR CORP), 21.Dezember 1993,
- PATENT ABSTRACTS OF JAPAN vol. 096, no. 003, 29.März 1996 & JP 07 305635 A (ISUZU MOTORS LTD;OTHERS: 01), 21.November 1995,

## Beschreibung

Die Erfindung betrifft ein Antriebssystem, insbesondere für ein Kraftfahrzeug.

Im Fahrbetrieb wird in einem Krafefahrzeug-Antriebssystem i.a. das vom Verbrennungsmotor auf eine Motorwelle aufgebrachte Drehmoment über eine Kupplung auf eine Getriebewelle, und dann über ein Getriebe auf eine Achsantriebswelle übertragen.

Im Leerlaufbetrieb ist dagegen die Drehmomentübertragung im Antriebsstrang unterbrochen, z.B. durch Öffnen der Kupplung oder Freischalten des Getriebes. Der Verbrennungsmotor dient dann nicht mehr zum Antrieb des Fahrzeugs, sondern braucht nur noch die von ihm selbst aufgesetzte Reibungsarbeit zu leisten und daneben mechanische oder elektrische, mit der Motorwelle gekoppelte Hilfsaggregate anzutreiben, wie Pumpen, Servoantriebe und einen Generator.

Um Kraftstoffverbrauch, Schadstoffausstoß und Geräuschentwicklung gering zu halten, soll die Leerlaufdrehzahl möglichst niedrig sein. Sie kann jedoch nur bis zu einer bestimmten Drehzahl (sog. kritischen Drehzahl) abgesenkt werden. Unterhalb dieser Drehzahl läuft der Verbrennungsmotor nicht mehr rund oder bleibt sogar stehen, da die momentan gespeicherte kinetische Rotationsenergie nicht ausreicht, die für einen Kompressionstakt erforderliche Kompressions- und Beschleunigungsarbeit aufzubringen. Unter Leerlaufbetrieb im weiteren Sinn wird somit jeder Betriebszustand des Antriebssystems verstanden, in dem der Verbrennungsmotor keine Fahrzeugantriebsfunktion hat und auf einer möglichst geringen Drehzahl, nahe der kritischen Drehzahl, läuft.

Die Steuerung der Leerlaufdrehzahl erfolgt in herkömmlichen Antriebssystemen i.a. über eine Veränderung der zugeführten Luftmenge und/oder des Luft-Kraftstoffverhältnisses und/oder des Zündzeitpunkts. Die Leerlaufdrehzahl soll dabei unabhängig von momentan vorliegenden Betriebsbedingungen sowie von Lastschwankungen der Hilfsaggregate einen bestimmten Sollwert annehmen (sog. Soll-Leerlaufdrehzahl), der einen gewissen Sicherheitsabstand oberhalb der kritischen Drehzahl hat. Ein gewisser Sicherheitsabstand wäre i.a. selbst dann vonnöten, wenn keinerlei Lastschwankungen im Leerlauf zu erwarten wären, da herkömmliche Leerlaufsteuerungen i.a. keine sehr genaue Konstanthaltung der Leerlaufdrehzahl auf den Sollwert gewährleisten. Um angesichts dieser auch ohne Lastschwankung vorliegenden Drehzahländerungen ein Unterschreiten der kritischen Drehzahl auszuschließen, muß bereits dieser gewisse Sicherheitsabstand vorgesehen sein. Dazu kommt die Auswirkung der Lastschwankungen.

Es sei angemerkt, daß der Begriff "Steuerung" im gesamten vorliegenden Text in einem weiten Sinn verstanden wird, der oberbegriffsartig die Begriffe "Steuerung" (im engen Sinn, d.h. Beeinflussung einer Größe in offener Wirkungskette) und "Regelung" (d.h. Beeinflussung einer Größe aufgrund Vergleich mit einer anderen vorgegebenen Größe) umfaßt. Entsprechendes gilt für abgeleitete Begriffe, wie "steuern", "Steuergerät", etc.

Obwohl herkömmliche Leerlaufdrehzahl-Steuerungen grundsätzlich funktionieren, haben sie u.a. folgende Nachteile:
Die Steuerung mit Hilfe der Luftmenge oder dem Luftkraftstoffverhältnis (sog. Füllungseingriff) ist relativ langsam, d.h. nach einer Abweichung dauert es relativ lange bis die Soll-Leerlaufdrehzahl wieder erreicht wird. Um einer Änderung der Leerlaufdrehzahl schnell entgegenwirken zu können (und so insbesondere ein Unterschreiten der kritischen Drehzahl zu vermeiden), muß das Drehmoment des Verbrennungsmotors aber sehr schnell erhöht werden können.

Es sind daher im Stand der Technik spezielle, zu einer schnelleren Angleichung an die Solldrehzahl führende Steuerverfahren vorgeschlagen worden, die z.B. auf einer sog. Störgrößenaufschaltung beruhen (Störgröße ist z.B. ein großer Verbraucher). Dennoch bedarf auch eine solche Füllungseingriff-Steuerung einen relativ großen Sicherheitsabstand von der kritischen Drehzahl und damit eine relativ hohe Leerlaufdrehzahl.

Eine Steuerung, die auf einer Verstellung des Zündzeitpunkts beruht (sog. Zündungseingriff), erlaubt eine sehr schnelle Angleichung an die Soll-Leerlaufdrehzahl. Sie beruht darauf, daß ein später Zündzeitpunkt zu einem geringeren, ein früher Zündzeitpunkt zu einem höheren Drehmoment führt. Deshalb wird der Zündzeitpunkt im Leerlauf auf "spät" eingestellt. Durch Verstellen "spät" auf "früh" bei einer Drehzahlverringerung kann daher schnell das Drehmoment erhöht und so insbesondere ein Unterschreiten der kritischen Drehzahl verhindert werden.

Bei spätem Zündzeitpunkt läuft der Verbrennungsmotor jedoch im Vergleich zu einem frühen Zündzeitpunkt mit einem geringeren Wirkungsgrad. Damit führt auch die Leerlaufdrehzahl-Steuerung mit Zündungseingriff zu einem relativ hohen Kraftstoffverbrauch.

Aus der EP 035 790 A2 ist es bekannt, mit Hilfe einer elektrischen Maschine Leerlauf-Drehmomentschwankungen eines Verbrennungsmotors entgegenzuwirken, und zwar durch Aufbringen antreibender oder bremsender Drehmomente. Die Drehmomentschwankungen werden von den Gas- und Massenkräften des Verbrennungsmotors hervorgerufen und sind daher schnell variierend. Eine Kompensation von aufgeschalteten mechanischen Lasten ist nicht Gegenstand dieser Druckschrift.

Die EP 0 743 211 A2 betrifft eine Stopprozedur des Verbrennungsmotors bei einem Hybridfahrzeug.

Die DE 34 42 112 C2 betrifft eine Getriebeüberbrückung bei Schubabschaltung zwecks Antreiben von Nebenaggregaten durch den Achsantrieb des Fahrzeugs.

Die DE 43 25 505 A1 und die DE 41 08 751 C2 betreffen Steuerungsarten der Lichtmaschine eine Kraftfahrzeugs, bei der diese im Fall einer Lastaufschaltung ein verringertes Bremsmoment erzeugt, um zu einer Konstanthaltung der Leerlaufdrehzahl beizutragen. Bei der erstgenannten geht es dabei um die Aufschaltung elektrischer Lasten.

Die Erfindung hat zum Ziel, oben angesprochene Probleme der herkömmlichen Leerlaufdrehzahl-Steuerungen zu lösen. Sie erreicht dies mit dem Gegenstand des Anspruchs 1. Danach umfaßt ein Antriebssystem, insbesondere für ein Kraftfahrzeug, mit einem Verbrennungsmotor; wenigstens einer elektrischen Drehstrommaschine, die den Verbrennungsmotor mit bremsendem und antreibenden Drehmoment beaufschlagen kann; einem Wechselrichter zur Speisung der elektrischen Maschine, der einen Zwischenkreis mit einem gegenüber einem Bordnetz erhöhten Spannungsniveau aufweist, und einer Steuerung, welche bei einer Aufschaltung einer mechanischen Last im Leerlauf des Verbrennungsmotors einerseits eine entsprechende Erhöhung des Drehmoments des Verbrennungsmotors einleitet (z.B. durch Füllungseingriff), und andererseits, bis dieser Verbrennungsmotoreingriff wirksam wird, die elektrische Maschine so steuert, daß sie vorübergehend ein weniger bremsendes oder antreibendes Drehmoment aufbringt, so daß die Leerlaufdrehzahl weitgehend konstant bleibt.

Die elektrische Maschine wird insbesondere so gesteuert, daß sie bei einer Verringerung der Leerlaufdrehzahl ein antreibendes Drehmoment aufbringt, welches ggf. einem schon zuvor aufgebrachten bremsenden Moment überlagert (z.B. zu diesem addiert) wird. Beispielsweise kann die elektrische Maschine als Generator dienen. Bei einer Leerlaufdrehzahlverringerung wird dann das anstehene generatorische Bremsmoment verringert oder durch ein antreibendes Moment ersetzt. Entsprechend bringt die elektrische Maschine bei einer Erhöhung der Leerlaufdrehzahl insbesondere ein bremsendes Drehmoment auf oder erhöht ihr bremsendes Drehmoment bzw. verringert ihr antreibendes Drehmoment oder überführt es in ein bremsendes.

Es wird angemerkt, daß die vorliegende Erfindung nicht auf die Reduzierung von Drehungleichförmigkelten gerichtet ist, die beim Hubkolbenverbrennungsmotor aufgrund von Gas- und Massenkräften im wesentlichen periodisch als Oberschwingungen zur Kurbelwellendrehung auftreten. Beispielsweise führen die Massenkräfte beim Vierzylinder-Reihenmotor zu einer Drehungleichförmigkeit mit der doppelten Drehfrequenz z.B. also bei einer Leerlaufdrehzahl von 600 min⁻¹ mit einer Frequenz von 20 s⁻¹. Die aktive Dämpfung solcher Drehungleichförmigkeiten mit Hilfe einer elektrischen Maschine ist z.B. auch aus der DE 44 23 577 C2 und der DE 40 15 701 bekannt.

In der vorliegenden Beschreibung wird daher unter "Drehzahl" jeweils ein über diese Drehungleichförmgkeiten gemittelter (oder auf sonstigem Wege von Drehungleichförmigkeiten bereinigter) Drehzahlwert verstanden. Bei der Erfindung geht es darum, im Leerlauf Abweichungen dieser mittleren Drehzahl von einer Solldrehzahl zu reduzieren.

Das Antriebssystem gehört vorzugsweise zu einem Fahrzeug insbesondere einem Straßenfahrzeug, oder auch einem Wasseroder Schienenfahrzeug. Der Verbrennungsmotor dient vorzugsweise als Fahrzeug-Antriebsaggregat. Er ist insbesondere ein Hubkolbenmotor mit innerer Verbrennung, beispielsweise ein Otto- oder Dieselmotor. Die elektrische Maschine ist eine Rotationsmaschine, die motorisch und ggf. auch generatorisch betreibbar ist. Es handelt sich um eine Drehfeldmaschine ("Drehstrommaschine").

Unter Drehfeldmaschine wird - im Gegensatz etwa zu einer Stromwendermaschine - eine insbesondere kommutatorlose Maschine verstanden, in der ein magnetisches Drehfeld auftritt, das vorzugsweise 360°C überstreicht. Die Maschine kann insbesondere als Asynchronmaschine, z.B. mit Kurzschlußläufer, oder als Synchronmaschine, z.B. mit Läufer mit ausgeprägten Magnetpolen ausgebildet sein. Der Kurzschlußläufer bei der Asynchronmaschine kann z.B. ein hohler Käfigläufer mit Käfigstäben in Axialrichtung sein. Bei anderen Ausgestaltungen der Asynchronmaschine weist der Läufer Wicklungen auf, die über Schleifringe extern kurzgeschlossen werden können. Die ausgeprägten Magnetpole des Läufers bei der Synchronmaschine erreicht man z.B. durch Permanentmagnete oder durch Elektromagnete, die z.B. über Schleifringe mit Erregerstrom gespeist werden können.

Die elektrische Maschine kann indirekt, etwa über Ritzel, Keilriemen, etc. mit der Motorwelle gekoppelt sein. Besonders vorteilhaft sitzt aber ein Teil der Maschine, insbesondere der Läufer, direkt auf der Motorwelle und ist ggf. drehfest mit ihr gekoppelt. Der Läufer kann beispielsweise auf der zum Getriebe führenden Welle sitzen, oder an der anderen Seite des Verbrennungsmotors auf dem dort blind endenden Wellenstummel. Ein anderer Teil, insbesondere der Ständer, ist drehfest mit einem nicht drehbaren Teil verbunden oder lösbar verbindbar, z.B. dem Motorgehäuse, dem Getriebegehäuse oder dem Chassis.

Neben ihrer erfindungsgemäßen Funktion im Rahmen der Leerlaufsteuerung hat die elektrische Maschine vorteilhaft eine oder mehrere Zusatzfunktionen, sie dient z.B. als Starter für den Verbrennungsmotor, als Generator für die Bordnetzversorgung, als zusätzlicher Antriebsmotor für das Fahrzeug, als Fahrzeugbremse und/oder als Aktivdämpfer zur Reduzierung von Drehunglelchförmigkeiten.

Die elektrische Maschine kann so ausgelegt sein, daß das von ihr erzeugbare Drehmoment klein im Vergleich zu dem des Verbrennungsmotors ist. Für manche Zusatzfunktionen ist ein großes Drehmoment vorteilhaft; z.B. ein so großes, das die elektrische Maschine beim Antrieb des Fahrzeugs beträchtlich unterstützen oder gar das Fahrzeug allein antreiben kann. Vorzugsweise erfolgt die Versorgung der elektrischen Maschine über einen Wechselrichter. Dieser kann die für die magnetischen Felder benötigten Spannungen und/oder Ströme (innerhalb gewisser Grenzen) frei wählbarer Frequenz, Amplitude und/oder Phase erzeugen.

Die Steuerung der elektrischen Maschine kann grundsätzlich durch Steuerung im engen Sinn (offene Wirkungskette) erfolgen, etwa indem bei einer Lastaufschaltung (z.B. Einschalten eines mit dem Verbrennungsmotor gekoppelten Kompressors einer Klimaanlage) die elektrische Maschine ein im Betrag und zeitlichen Verlauf vorbestimmtes unterstützendes Drehmoment erzeugt.

Alternativ kann die Steuerung durch Regelung erfolgen. Zum Beispiel erfaßt ein Sensor die Leerlaufdrehzahl und liefert die Daten an die Steuerung, hier in Form einer Regelung. Diese steuert den Wechselrichter auf der Basis eines Vergleichs mit dem Leerlaufdrehzahl-Sollwert so, daß die elektrische Maschine einer Änderung der Leerlaufdrehzahl durch Aufbringen eines antreibenden (oder ggf. bremsenden) Drehmoments entgegenwirkt und so die Drehzahl im wesentlichen oder genau auf dem Sollwert hält. Der Regler kann beispielsweise eine P-, PI- oder PID-Charakteristik haben.

Vorteilhaft ist auch eine Regelung mit Störgrößenaufschaltung, bei der eine Störgröße - etwa eine Laständerung - auf den Reglereingang oder -ausgang aufgeschaltet wird, und so zu einem Drehmomenteingriff der elektrischen Maschine führt, bevor sich die Laständerung in eine Drehzahländerung auswirkt. Beispielsweise kann beim Ein- und Ausschalten eines großen mechanischen Verbrauches, z.B. eines Kompressors einer Klimaanlage, ein entsprechendes Signal an die Regelung gegeben werden, die daraufhin unmittelbar die elektrische Maschine veranlaßt, die erwartete Laständerung noch vor Auftreten einer merklichen Drehzahländerung zu kompensieren.

Das von der elektrischen Maschine abgegebene Drehmoment kann schnell und genau verstellt werden, so daß die Leerlaufsteuerung praktisch verzögerungsfrei und ohne Totzeit Erfolge. Die Leerlaufdrehzahl sinkt bei der Erfindung gar nicht oder zumindest weniger weit ab als bei einer herkömmlichen langsamen Steuerung (z.B. mit Füllungseingriff).
Folglich kann die Soll-Leerlaufdrehzahl des Verbrennungsmotors niedrig gewählt und dennoch ein Unterschreiten der kritischen Drehzahl verhindert werden.

Gegenüber herkömmlichen schnellen Steuerungen (z.B. mit Zündungseingriff) erlaubt die Erfindung einen Leerlaufbetrieb mit optimaler Zündzeitpunkteinstellung.

Die Erfindung hat somit folgende Vorteile: Sie bedingt
- einen geringeren Kraftstoffverbrauch;
- eine geringere Abgasemission; und
- eine geringere Lärmbelastung.

Sie bietet damit einen Beitrag zum Umweltschutz und zum sinnvollen Einsatz knapper Resourcen.

Wie oben bereits ausgeführt wurde, ist die Steuerung derart ausgelegt, daß sie einer Verringerung oder Erhöhung der Leerlaufdrehzahl aufgrund einer Lastaufschaltung bzw. - wegschaltung entgegenwirkt.

Ein Antriebsverbrennungsmotor treibt nämlich im Leerlauf i.a. neben einem Teil des Antriebsstrangs mechanisch mehrere Hilfsaggregate an, z.B. Servoantriebe und Pumpen. Eine Laständerung wird durch eine Änderung der Anzahl anzutreibender oder zu speisender Lasten und/oder eine Änderung deren Drehmoments hervorgerufen. Eine Vergrößerung dieser Größen wird als Lastaufschaltung, eine Verringerung als Lastwegschaltung bezeichnet. Eine Lastaufschaltung liegt z.B. vor beim Einschalten eines mechanisch angetriebenen Klimakompressors oder etwa beim Einkuppeln des (freigeschalteten) Getriebes, eine Entlastung entsprechend beim Abschalten solcher Geräte und beim Auskuppeln. Laständerungen, die sprungartig große Werte annehmen können, führen entsprechend zu plötzlichen großen Drehzahländerungen. Aufgrund des sehr schnellen Eingriffs der elektrischen Maschine kann mit Hilfe der Erfindung dennoch die Soll-Leerlaufdrehzahl niedrig gewählt werden, ohne daß die kritische Drehzahl bei Lastaufschaltung unterschritten würde.

Wie oben ausgeführt wurde, ist die Steuerung besonders vorzugsweise als störgrößenbeaufschaltete Regelung ausgebildet, wobei die Störgrößen insbesondere eine oder mehrere Lasten sind (Ansprüche 2 und 3).

Da der Eingriff mit der elektrischen Maschine einen herkömmlichen Zündungseingriff überflüssig macht, wird der Verbrennungsmotor im Leerlaufbetrieb vorteilhaft praktisch dauernd bei optimalem Zündzeitpunkt (soweit es sich um einen Ottomotor handelt) betrieben (Anspruch 4). Für den Zündzeitpunkt gilt allgemein, daß er einerseits für einen hohen Wirkungsgrad und eine geringe thermische Belastung des Verbrennungsmotors relativ früh, andererseits für eine geringe Abgasemission relativ spät liegen sollte. Der optimale Kompromiß zwischen diesen Größen, der im übrigen von der Drehzahl und der Last abhängt, bildet den "optimalen Zündzeitpunkt". Es ist derjenige Wert, der herkömmlich bei einem Motor im entsprechenden Betriebszustand eingestellt würde, wenn dieser keinen Laständerungen unterworfen wurde.

Nach einem Eingriff durch die elektrische Maschine erfolgt eine Verstellung eines Verbrennungsmotor-Betriebsparameters dahingehend, daß der Eingriff mit der Zeit verschwindet. Reagiert der Verbrennungsmotor langsam, so wird das Kurzzeit-Steuerverhalten nach einer plötzlichen Laständerung allein durch die elektrische Maschine bestimmt. Es ist aber auch möglich, den Verbrennungsmotor in das Kurzzeit-Steuerverhalten einzubeziehen, indem auch er schnell eingreifend - aufgrund einer Veränderung einer oder mehrere seiner Betriebsparameter durch die Steuerung - einer Änderung der Leerlaufdrehzahl entgegenwirkt. Die Steuerung kann z.B. die Betriebsparameter "zugeführte Luftmenge", "Kraftstoff-Luftverhältnis" und/oder "Zündzeitpunkt" verändern (wobei der Eingriff über die beiden erstgenannten Parameter bevorzugt ist).

Dabei reagiert die elektrische Maschine schneller auf eine Änderung der Leerlaufdrshzahl als der Verbrennungsmotor. Dies erlaubt es einer Änderung der Leerlaufdrehzahl zunächst im wesentlichen mit der elektrischen Maschine und dann im wesentlichen mit dem Verbrennungsmotor entgegenzuwirken. Vorteil dieser zweistufigen Steuerung ist einerseits, daß der Verbrennungsmotor stets bei optimalem Zündzeitpunkt betrieben werden kann, da das von ihm abgegebene Moment nur langsam geändert werden muß (z.B. über Füllungseingriff). Andererseits wird die elektrische Maschine nur kurzzeitig von der Leerlaufsteuerung in Beschlag genommen, sie steht dann schnell wieder für andere Aufgaben zur Verfügung (z.B. der Versorgung elektrischer Verbraucher).

Bei der bevorzugt auf Regelung beruhenden Steuerung der elektrischen Maschine und/oder des Verbrennungsmotors erhält die Steuerung Information von einem Sensor, der die Drehzahl des Verbrennungsmotors erfaßt, oder eine Größe, aus der diese abgeleitet werden kann (Anspruch 5). Für die bevorzugte Störgrößenaufschaltung erhält die Steuerung der elektrischen Maschine und/oder des Verbrennungsmotors außerdem Information von einem oder mehreren Sensoren, die Laständerungen erfassen (Anspruch 6). Hierbei kann es sich z.B. um Steuersignale zum Ein- oder Ausschalten von großen Verbrauchern handeln.

Bei einer vorteilhaften Weiterbildung weist das System wenigstens einen Ensrgiespeicher auf, der auf dem erhöhten Spannungsniveau des Zwischenkreises liegt (Anspruch 7). Vorteilhaft wird wenigstens ein Verbraucher (inbesondere ein Hochleistungsverbraucher) aus dem Zwischenkreis mit elektrischer Energie auf dem erhöhten Spannungsniveau versorgt. Dieser Verbraucher wird vorteilhaft, wenn die elektrische Maschine aufgrund Leerlaufdrehzahlkonstanthaltung vorübergehend weniger oder keine elektrische Energie liefert, wenigstens teilweise aus dem auf dem erhöhten Spannungsniveau liegenden Energiespeicher gespeist. Im Fall einer vorübergehend antreibenden Wirkung der elektrischen Maschine zwecks Leerlaufkonstanthaltung diese vorteilhaft wenigstens teilweise aus dem auf dem erhöhten Spannungsniveau liegenden Energiespeicher gespeist (Anspruch 8).

Die Erfindung wird nun anhand von Ausführungsbeispielen und der angefügten schematischen Zeichnung näher erläutert. In der Zeichnung zeigen:
- Fig. 1: eine Schemadarstellung der wichtigsten Funktionsblöcke eines Antriebssystems;
- Fig. 2: eine unmaßstäblich-schematische Darstellung des Antriebssystems;
- Fig. 3: eine schematische beispielhafte Darstellung der Wirkungsweise des Antriebssystems;
- Fig. 4a/b: schematische, dem besseren Verständnis dienende Darstellungen von Soll-Leerlaufdrehzahl, kritischer Drehzahl und minimaler und maximaler tatsächlicher Leerlaufdrehzahl bei Lastaufschaltung bei einem Antriebssystem ohne und mit Regelungseingriff durch eine elektrische Maschine;
- Fig. 5: ein Flußdiagramm eines Verfahrens zum Entgegenwirken einer Änderung der Leerlaufdrehzahl.

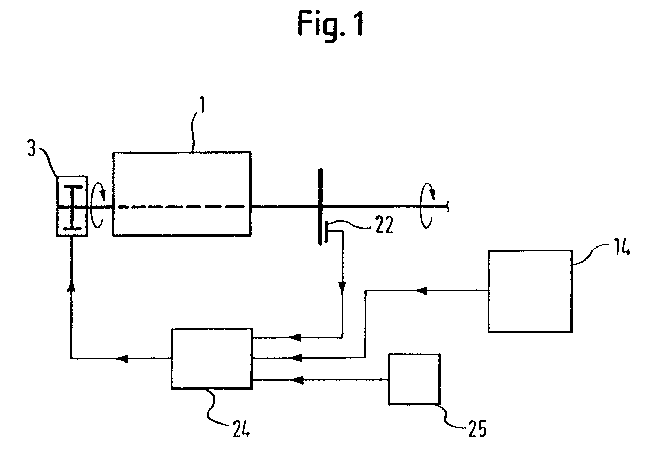

Ein Antriebssystem eines Fahrzeugs, z.B. eines Personenkraftwagens, gemäß Fig. 1 weise einen Verbrennungsmotor 1, eine elektrische Maschine 3, einen Drehzahlsensor 22, einen Regler 24, einen Leerlaufdrehzahl-Sollwertgeber 25 auf. Letzterer liefert einen konstanten Leerlaufdrehzahl-Sollwert an den Regler 24. Dieser vergleicht den durch einen Drehzahlsensor 22 gemessenen Istwert der Leerlaufdrehzahl und veranlaßt bei einer Abweichung der beiden Werte voneinander die elektrische Maschine 3 dazu, ein Drehmoment aufzubringen, welches die Ist-Leerlaufdrehzahl auf den Sollwert bringt. Bei dem für den Vergleich verwendeten Istwert werden Drehungleichförmigkeiten des Verbrennungsmotors 1, die von dessen Gas- und Massenkräften herrühren, nicht berücksichtigt, was z.B. durch entsprechende Mittelung oder Filterung von deren Beiträgen geschehen kann. Der Sollwert kann z.B. in Abhängigkeit von Betriebsbedingungen, z.B. der Temperatur des Verbrennungsmotors 1 geändert werden, wobei die Zeitkonstante solcher Änderungen groß gegenüber derjenigen von typischen Leerlaufdrehzahländerungen ist. In diesem Sinn ist der Begriff "konstanter Sollwert" hier zu verstehen. Ein weiteres Signal am Eingang des Reglers 24 gibt an, ob mechanische Verbraucher 14 oder sonstige Lasten ein- oder ausgeschaltet werden. Diese Störgrößenaufschaltung erlaubt einen entsprechenden Eingriff mit der elektrischen Maschine 3 noch bevor sich die Laständerung als Drehzahländerung auswirkt. Die elektrische Maschine 3 fungiert also als Stellglied in einem Leerlaufdrehzahl-Regelkreis.

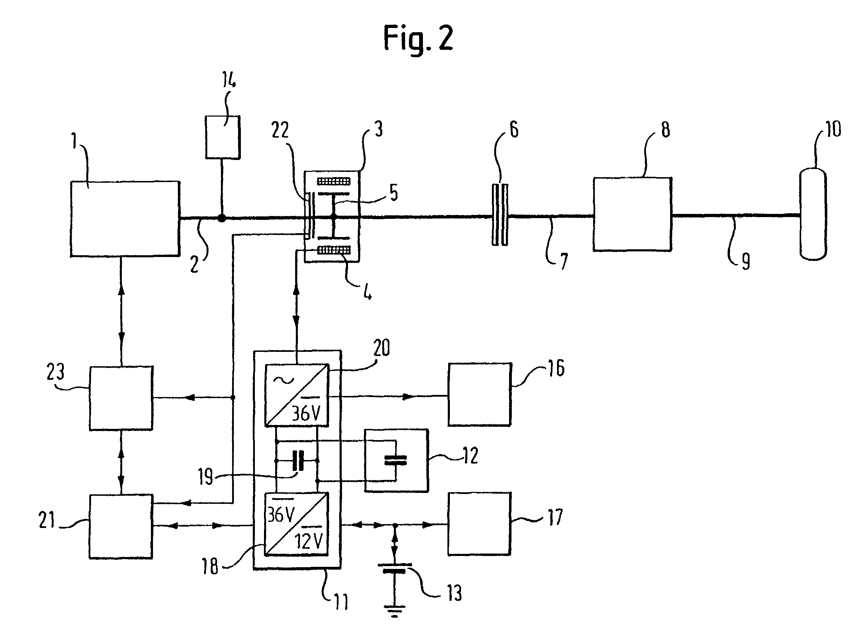

Bei dem Verbrennungsmotor 1 des Antriebssystems gemäß Fig. 2 handelt es sich beispielsweise um einen Vierzylinder-Ottomotor. Er bringt ein Drehmoment auf eine Motorwelle 2 auf. Mechanisch mit der Motorwelle 2 verbunden sind Verbraucher 14, z.B. ein Kompressor für eine Klimaanlage und/oder eine Pumpe für einen Servoantrieb.

Die elektrische Maschine 3, hier eine Dreiphasen-Drehfeldmaschine in Asynchron- oder Synchron-Bauart umfaßt einen Ständer 4 und einen Läufer 5. Der Ständer 4 stützt sich drehfest gegen den Verbrennungsmotor oder ein (nicht gezeigtes) Kupplungsgehäuse ab. Der Läufer 5 sitzt auf der Motorwelle 2 und ist mit dieser drehfest gekoppelt oder koppelbar. Die elektrische Maschine 3 ist als Motor und Generator betreibbar und kann somit antreibende und bremsende Drehmomente auf die Motorwelle 2 aufbringen.

Im Fahrbetrieb wird das Drehmoment von der Motorwelle 2 über eine Kupplung 6 auf eine Getriebewelle 7, und über ein Getriebe 8 auf eine Antriebswelle 9 und Antriebsräder 10 übertragen. Im Leerlaufbetrieb ist dagegen ausgekuppelt, d.h. die Motorwelle 2 ist mit Hilfe der Kupplung 6 von der Getriebewelle 7 entkoppelt, oder das Getriebe ist freigeschaltet, d.h. die Getriebewelle 7 ist von der Antriebswelle 9 entkoppelt. Bei der Kupplung 6 und dem Getriebe 8 kann es sich um eine Reibungskupplung und ein Schaltgetriebe handeln, oder alternativ z.B. um eine automatische Kupplung oder eine Wandlerkupplung mit Schaltgetriebe, automatischem oder stufenlosem Getriebe.

Wie oben ausgeführt wurde, fungiert die elektrische Maschine als Stellglied in einem Leerlaufdrehzahl-Regelkreis. Bei einer Verringerung der (über Drehungleichförmigkeiten gemittelten) Leerlaufdrehzahl des Verbrennungsmotors 1 unter den Sollwert bringt sie antreibendes Drehmoment auf oder überlagert ein solches einem ggf. bereits von ihr erzeugten bremsenden Drehmoment (sie bremst also schwächer). Entsprechend bringt sie bei einer Erhöhung der Leerlaufdrehzahl über den Sollwert ein bremsendes Drehmoment auf bzw. überlagert ein solches einem ggf. bereits von ihr erzeugten Drehmoment. Auf diese Weise wirkt sie einer Verringerung oder Erhöhung der Leerlaufdrehzahl entgegen und hält sie auf dem Sollwert.

Erzeugt die elektrische Maschine 3 ein antreibendes Moment, fungiert sie als Motor. Die hierbei benötigte elektrische Energie kann zunächst einem Zwischenkreisspeicher 19 eines Wechselrichters 11 entnommen werden (bei ihm handelt es sich z.B. in erster Linie um einen Glättungskondensator). Bei länger andauerndem Bedarf wird die elektrische Energie einem ersten Energiespeicher 12 und - wenn dies nicht ausreicht - ggf. einem zweiten Energiespeicher 13 entnommen und über den Wechselrichter 11 bereitgestellt. Die Energiespeicher 12, 13 können jeweils als Batterie, Schwungrad, Kondensator oder Kombinationen hieraus ausgeführt sein. Hier ist der erste Energiespeicher 12 ein Kondensator und der zweite Energiespeicher 13 eine Batterie. Der Zwischenkreis hat eine erhöhte Spannung (z.B. 36 V) gegenüber einem Niederspannungsbordnetz (z.B. 12 V). Die Speicher 19 und 12 liegen auf dem erhöhten Spannungsniveau des Zwischenkreises, während der Speicher 13 auf dem niedrigen Niveau des Niederspannungsbordnetzes liegt.

Erzeugt die elektrische Maschine 3 hingegen ein bremsendes Moment, fungiert sie als Generator. Die hierbei erzeugte elektrische Energie kann im Energiespeicher 12 auf dem Zwischenkreisniveau und ggf. ergänzend im Speicher 13 gespeichert und für andere Zwecke wiederverwendet (also rekuperiert) werden.

Die elektrische Maschine 3 hat neben ihrer Aufgabe als Stellglied der Leerlaufdrehzahlregelung weitere Funktionen: Sie dient einerseits als Starter für den Verbrennungsmotor 1 und ersetzt somit den herkömmlicherweise beim Kraftfahrzeug gesondert vorgesehenen Startermotor. Andererseits dient sie während des Fahrbetriebs und - soweit neben ihrer Stellaufgabe möglich - während des Leerlaufbetriebs als Generator. Sie ersetzt damit auch den herkömmlicherweise im Fahrzeug vorhandenen gesonderten Generator. Zu Zeiten ohne oder mit verringerter Versorgung durch die elektrische Maschine 3 - also wenn die Maschine 3 zwecks Leerlaufdrehzahlkonstanthaltung schwächer bremsend oder antreibend wirkt - beziehen die elektrischen Verbraucher 16 zumindest einen Teil ihrer Energie aus dem Energiespeicher 12 auf dem hohem Spannungsniveau, und die elektrischen Verbraucher 17 aus dem Energiespeicher 13 auf dem niedrigen Spannungsniveau. Dabei sind die mit der niedrigen Spannung gespeisten Verbraucher 17 solche mit niedriger Leistungsaufnahme, beispielsweise Beleuchtung und elektronische Geräte, und die mit der hohen Spannung gespeisten Verbraucher 16 sind solche mit hoher Leistungsaufnahme, wie z.B. elektrische Heizungen. Ferner kann die elektrische Maschine zum Antrieb des Fahrzeugs sowie zu dessen Bremsung beitragen, also als "Booster" und als "Retarder" fungieren. Bei antreibender Wirkung erfolgt die Speisung der elektrischen Maschine 3 aus dem auf dem hohen Zwischenkreisspannungsniveau liegenden Energiespeicher 12.

Der Wechselrichter 11 liefert einer Ständerwicklung der elektrischen Maschine 3 bei einer hohen Taktfrequenz pulsweitenmodulierte sinusbewertete Spannungsimpulse, die unter der Wirkung der Maschineninduktivität im wesentlichen sinusförmige Dreiphasen-Ströme ergeben, deren Amplitude, Frequenz und Phase frei wählbar ist. Damit ist ein Vierquadrantenbetrieb der elektrischen Maschine 3 bei frei einstellbaren Größen "Drehzahl" und "Drehmoment" möglich.

Die Spannungsimpulse werden mit Hilfe geeigneter Leistungshalbleiterschalter (z.B. Feldeffekttransistoren oder IGBT's) erzeugt.

Der Wechselrichter 11 ist ein Spannungszwischenkreis-Wechselrichter und umfaßt im wesentlichen drei Baugruppen: einen Gleichspannungswandler 18 (Eingangsbaugruppe), welcher Gleichspannung von einem niedrigen Niveau (hier 12 V) auf ein höheres Zwischenkreisniveau (hier 36 V) und in umgekehrter Richtung umsetzt, den elektrischen Zwischenkreisspeicher 19, hier ein Kondensator oder eine Anordnung parallel geschalteter Kondensatoren, und einen Maschinenwechselrichter 20 (Ausgangsbaugruppe), welcher aus der Zwischenkreis-Gleichspannung die (getaktete) Dreiphasen-Wechselspannung variabler Amplitude, Frequenz und Phase erzeugen kann oder - bei generatorischem Betrieb der elektrischen Maschine 3 - derartige beliebige Wechselspannungen in die Zwischenkreis-Gleichspannung umsetzen kann.

Außer dem Zwischenkreisspeicher 19 sind der erste Energiespeicher 12 und der elektrische Hochleistungsverbraucher 17 mit dem Zwischenkreis verbunden und liegen auf dessen höherem Spannungsniveau.

Eine Steuereinrichtung 21 gibt dem Wechselrichter 11 durch entsprechende Ansteuerung seiner Halbleiterschalter zu jedem Zeitpunkt vor, welche Amplitude, Frequenz und Phase die von ihm zu erzeugende Wechselspannung haben soll, um das von der elektrischen Maschine 3 zu liefernde beschleunigende oder bremsende Drehmoment herbeizuführen.

Die Drehmomentvorgaben im Rahmen der Leerlaufregelung erhält die Steuereinrichtung 21 von einem Verbrennungsmotor-Steuergerät 23. Dieses ist mit dem Drehzahlsensor 22 - hier einem Inkrementalgeber oder einem Drehtransformator (sog. Resolver) - gekoppelt und enthält den (hier nicht dargestellten) Sollwertgeber. Es ermittelt aus der Drehzahlmessung einen über Drehungleichförmigkeiten gemittelten Drehzahl-Istwert, vergleicht diesen mit dem Sollwert und gibt bei Abweichungen ein entsprechendes Regelsignal an die Steuereinrichtung 21. Das Steuergerät vereint also hier u.a. die Funktionen des Reglers 24 sowie des Sollwertgebers 25 aus Fig. 1. Bei anderen (nicht gezeigten) Ausführungsformen sind die Funktionen von Steuereinrichtung 21 und Steuergerät 23 in einem Gerät vereint.

Die Steuereinrichtung 21 kommuniziert mit weiteren Steuergeräten: zum Beispiel gibt ein (nicht gezeigtes) Energieverbrauchs-Steuergerät an, wieviel elektrische Energie zum Laden der Energiespeicher 16, 17 benötigt wird, so daß die Steuereinrichtung 21 die entsprechende Generatorfunktion der elektrischen Maschine 3 veranlassen kann. Ferner macht das Verbrennungsmotor-Steuergerät 23 Vorgaben zur Starter-, Boost- und Retarderfunktion.

Im übrigen ist es die Aufgabe des Verbrennungsmotor-Steuergeräts 23 Kraftstoffverbrauch, Abgaszusammensetzung, Drehmoment und Drehzahl des Verbrennungsmotors 1 über zugeführte Luftmenge (soweit diese nicht vom Fahrer durch die Fahrpedalstellung vorgegeben ist) Luftzahl, Zündzeitpunkt, Einspritzzeitpunkt, Ventilöffnung und -schließung, etc. zu steuern. Bei Ausführungsformen, bei denen die Leerlaufregelung neben dem Eingriff mit der elektrischen Maschine 3 auch auf einem Füllungseingriff beruht, veranlaßt das Steuergerät 23 bei Abweichungen der Leerlauf-Istdrehzahl von der Solldrehzahl neben der Ansteuerung der elektrischen Maschine auch eine entsprechende Veränderung der Luft und/oder Kraftstoffmenge. Dies kann simultan mit deren Ansteuerung oder zeitlich verzögert erfolgen.

Die Steuerung des Gesamtsystems aus elektrischer Maschine 3 und Verbrennungsmotor 1 erfolgt von außen über die Fahrpedalstellung und daneben über Brems-, Kupplungs- und Getriebebetätigung sowie durch Betriebsgrößen wie Kurbelwellendrehzahl, Kurbelwellenwinkel (Verbrennungsmotortemperatur), Klopfen, gemessener Lambda-Wert etc.

Der Leerlaufdrehzahlregler 24 hat vorzugsweise P- oder PI-Charakteristik. Besonders vorzugsweise hat er zusätzlich auch D-Charakteristik (insgesamt z.B. PID), um bereits auf Änderungen der Drehzahl anzusprechen, bevor sich diese noch in merkbaren Abweichungen vom Sollwert manifestieren. Bei zusätzlichem Füllungseingriff kann nach einer Drehzahländerung nach einiger Zeit der Eingriff der elektrischen Maschine 3 zurückgenommen werden, da dann der Verbrennungsmotor 1 infolge des Füllungseingriffs allein die Solldrehzahl halten kann. Bei Leerlaufregelung mit Störgrößenaufschaltung (nicht dargestellt in Fig. 2) ist ein noch schnellerer Eingriff der elektrischen Maschine 3 möglich.

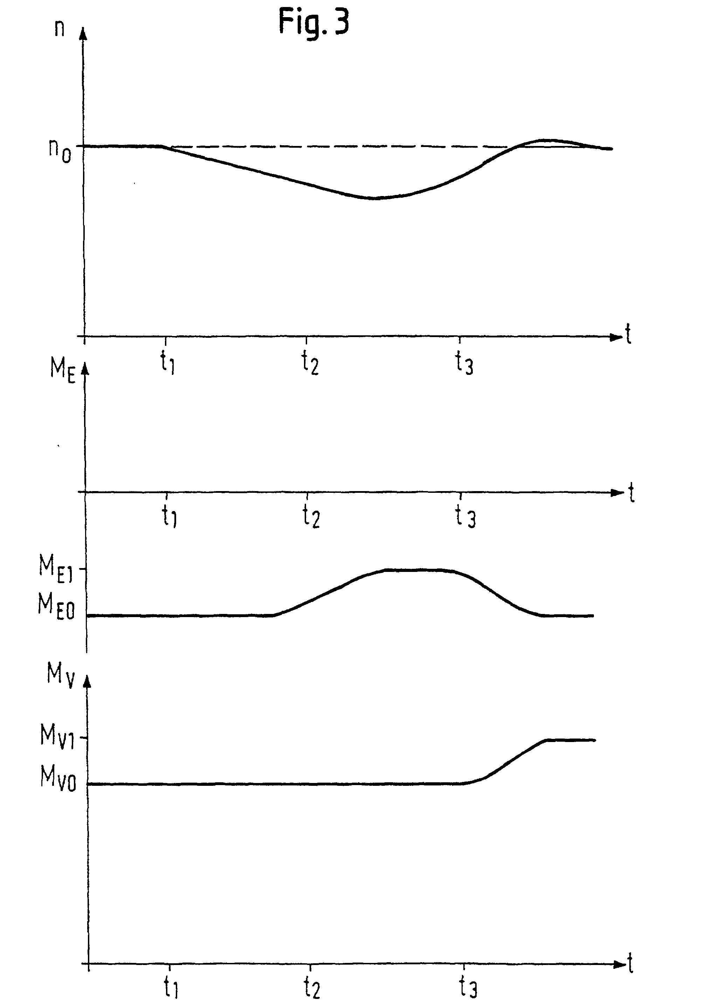

Ein Beispiel für die Wirkungsweise des erfindungsgemäßen Antriebssystems ist in Fig. 3 veranschaulicht. Dargestellt ist die Ist-Leerlaufdrehzahl n, die Soll-Leerlaufdrehzahl n₀, das von einer elektrischen Maschine auf eine Motorwelle aufgebrachte Drehmoment M_{E} und das von einem Verbrennungsmotor auf die Motorwelle aufgebrachte Drehmoment M_{V}, jeweils als Funktion der Zeit t. Die elektrische Maschine bringt zunächst ein bremsendes Drehmoment M_{E0} auf, z.B. im Rahmen ihrer Generatorfunktion zur Erzeugung elektrischer Energie.

Zum Zeitpunkt t₁ kommt es zu einer Lastaufschaltung eines mechanischen Verbrauchers 14, der hier in Form einer Sprungfunktion mit Sprung bei t₁ angenommen wird. Es wirkt so ein erhöhtes Gegendrehmoment auf die Motorwelle 2 und die Leerlaufdrehzahl n sinkt zunächst unter die Soll-Leerlaufdrehzahl n₀. Die elektrische Maschine verringert dann - aufgrund unvermeidlicher Verzögerungen erst zum Zeitpunkt t₂ - das von ihr aufgebrachte bremsende Drehmoment, hier von M_{E0} auf M_{E1}, bis die Leerlaufdrehzahl n wieder die Soll-Leerlaufdrehzahl n₀ erreicht. Der Hochleistungsverbraucher 16 wird während dieser Zeit zumindest teiweise durch den auf dem erhöhten Zwischenkreisniveau liegenden Speicher 12 gespeist. Bei antreibender Wirkung speist der Speicher 12 auch die elektrische Maschine.

Zum Zeitpunkt t₃ kann die elektrische Maschine 3 ihr Bremsmoment wieder erhöhen (hier auf M_{E0}), da inzwischen der Verbrennungsmotor 1 das von ihm abgegebene Drehmoment (hier von Mᵥ₀ auf Mᵥ₁) durch Füllungseingriff entsprechend erhöht hat. Die Leerlaufdrehzahl bleibt bei diesem Übergang praktisch auf dem Sollwert; die elektrische Maschine kann wieder mehr elektrische Energie erzeugen.

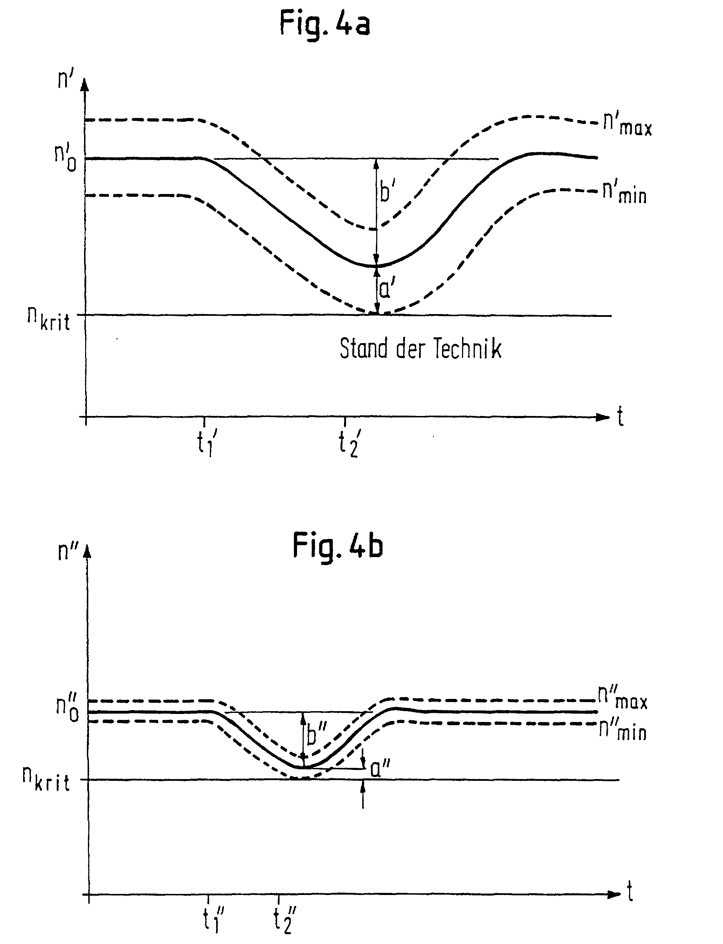

In Fig. 4a sind bei einer herkömmlichen Leerlaufregelung ohne Eingriff durch eine elektrische Maschine die (über Drehungleichförmigkelten gemittelte) Leerlaufdrehzahl n', die Soll-Leerlaufdrehzahl n₀' des Antriebssystems sowie die kritische Drehzahl nₖᵣᵢₜ des Verbrennungsmotors, die nicht unterschritten werden darf, jeweils als Funktion der Zeit dargestellt. Grundsätzlich kann es hier -aufgrund der relativ ungenauen Steuerung der Leerlaufdrehzahl mit Hilfe von Füllungs- oder Zündungseingriff - selbst ohne Laständerung zu relativ großen Abweichungen zwischen der Soll-Leerlaufdrehzahl n₀' und der Leerlaufdrehzahl n' kommen, so daß letztere in einem Band zwischen n'ₘᵢₙ und n'ₘₐₓ liegt. Aufgrund der relativ langsamen Regelung kann bei Füllungseingriff der Lastvergrößerung (hier zum Zeitpunkt t₁') erst relativ spät (hier zum Zeitpunkt t₂') entgegengewirkt werden. Die Leerlaufdrehzahl kann dann recht weit absinken. Damit die kritische Drehzahl nₖᵣᵢₜ nicht unterschritten wird, muß die Soll-Leerlaufdrehzahl n₀' aufgrund der a) ungenauen Steuerung um einen Betrag a', und aufgrund b) langsamen Regelung um einen Betrag b' höher eingestellt werden als die kritische Drehzahl nₖᵣᵢₜ, d.h. insgesamt um einen Betrag a'+ b' höher als die kritische Drehzahl nₖᵣᵢₜ.

In Fig. 4b sind entsprechend die Leerlaufdrehzahl n'', die Soll-Leerlaufdrehzahl n₀'' sowie die kritische Drehzahl nₖᵣᵢₜ des Verbrennungsmotors bei einer Leerlaufdrehzahlregelung mit Eingriff durch eine elektrische Maschine dargestellt. Aufgrund der wesentlich genaueren Steuerung der Leerlaufdrehzahl mit Hilfe der elektrischen Maschine 3 kommt es nur zu relativ kleinen Abweichungen zwischen der Soll-Leerlaufdrehzahl n₀'' und der Leerlaufdrehzahl n'', hier in einem wesentlich engeren Band zwischen n''ₘᵢₙ und n''ₘₐₓ. Aufgrund der wesentlich schnelleren Regelung der Vergrößerung (hier zum Zeitpunkt t₁'') kann schon relativ früh (hier zum Zeitpunkt t₂'') entgegengewirkt werden. Die Leerlaufdrehzahl n'' sinkt dann wesentlich weniger weit ab. Damit die kritische Leerlaufdrehzahl nₖᵣᵢₜ nicht unterschritten wird, muß die Soll-Leerlaufdrehzahl n₀'' nur um einen Betrag a''+ b'' höher eingestellt werden als die kritische Drehzahl nₖᵣᵢₜ. Insgesamt kann die Soll-Leerlaufdrehzahl n₀'' wesentlich niedriger, d.h. wesentlich näher bei der kritischen Drehzahl nₖᵣᵢₜ eingestellt werden als bei dem herkömmlichen Antriebssystem.

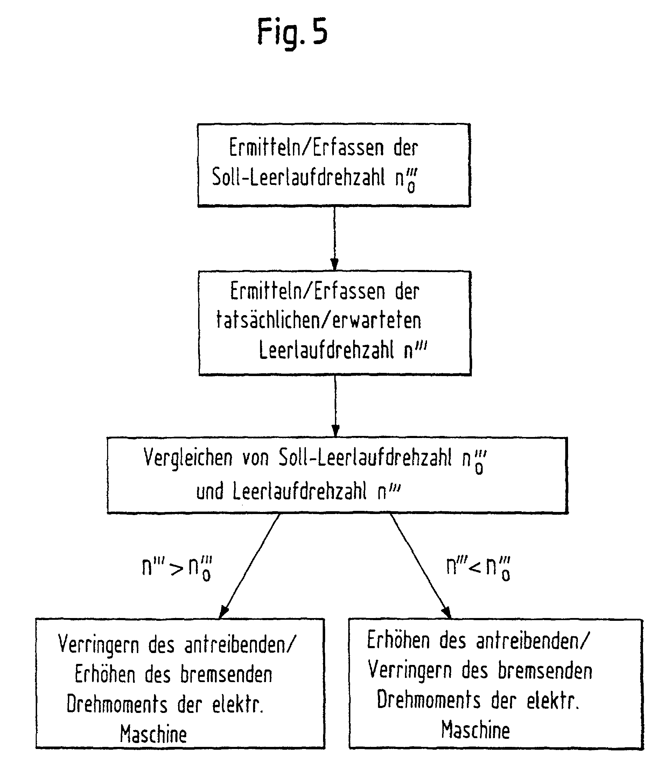

Bei dem Verfahren gemäß Fig. 5 wird zunächst die konstante Soll-Leerlaufdrehzahl n₀''' erfaßt/ermittelt. Diese ergibt sich aus konstanten Parametern, z.B. dem verwendeten Motortyp, sowie variablen Parametern, wie etwa die Verbrennungsmotortemperatur, die die Soll-Leerlaufdrehzahl n₀''' beeinflussen. Als nächstes wird die Leerlaufdrehzahl n''' direkt oder indirekt erfaßt/ermittelt. Dies ist insbesondere die tatsächliche momentane Leerlaufdrehzahl. Eine Störgrößenaufschaltung kann verfahrensmäßig z.B. so realisiert sein, daß nicht die tatsächliche, sondern die erwartete Leerlaufdrehzahl ermittelt wird, z.B. aus der momentanen Leerlaufdrehzahl und zusätzlichen Größen, wie Laständerungen, die diese beeinflussen werden. Die Leerlaufdrehzahl n''' (darunter fällt die tatsächliche oder die erwartete) wird mit der Soll-Leerlaufdrehzahl n₀''' verglichen. Liegt der Wert der Leerlaufdrehzahl n''' über dem der Soll-Leerlaufdrehzahl n₀''', erzeugt die elektrische Maschine ein relatives bremsendes Moment. Beispielsweise verringert sie ihr antreibendes Moment oder erhöht ihr bremsendes Moment. Zusätzlich kann z.B. durch Füllungseingriff des vom Verbrennungsmotor abgegebene Drehmoment verringert werden. Entsprechend umgekehrtes gilt, wenn der Wert der Leerlaufdrehzahl n''' unter dem der Soll-Leerlaufdrehzahl n₀''' liegt.

## Patentansprüche

1. Antriebssystem, insbesondere für ein Kraftfahrzeug, mit
- einem Verbrennungsmotor (1);
- wenigstens einer elektrischen Drehstrommaschine (3), die den Verbrennungsmotor (1) mit bremsendem und antreibenden Drehmoment beaufschlagen kann;
- einem Wechselrichter (11) zur Speisung der elektrischen Maschine (1), der einen Zwischenkreis mit einem gegenüber einem Bordnetz erhöhten Spannungsniveau aufweist, und
- einer Steuerung (21), welche bei einer Aufschaltung einer mechanischen Last im Leerlauf des Verbrennungsmotors (1) einerseits eine entsprechende Erhöhung des Drehmoments des Verbrennungsmotors (1) einleitet, und andererseits, bis dieser Verbrennungsmotoreingriff wirksam wird, die elektrische Maschine (3) so steuert, daß sie vorübergehend ein weniger Bremsendes oder antreibendes Drehmoment aufbringt, so daß die Leerlaufdrehzahl weitgehend konstant bleibt.

2. Antriebssystem nach Anspruch 1, bei welchem die Steuerung eine störgrößenbeaufschaltete Regelung ist.

3. Antriebssystem nach Anspruch 2, bei welchem Lasten Störgrößen darstellen.

4. Antriebssystem nach einem der vorhergehenden Ansprüche, bei welchem der Verbrennungsmotor (1) im Leerlaufbetrieb bei optimalem Zündzeitpunkt betrieben wird.

5. Antriebssystem nach einem der vorhergehenden Ansprüche, bei welchem die Steuerung (21, 23) der elektrischen Maschine (3) und/oder des Verbrennungsmotors (1) Information von einem Sensor (22) erhält, der die Drehzahl des Verbrennungsmotors (1) erfaßt.

6. Antriebssystem nach einem der vorhergehenden Ansprüche, bei welchem die Steuerung (21, 23) der elektrischen Maschine (3) und/oder des Verbrennungsmotors (1) Information von einem Sensor erhält, der Laständerungen erfassen kann.

7. Antriebssystem nach einem der vorhergehenden Ansprüche, mit wenigstens einem Energiespeicher (12, 19), der auf dem erhöhten Spannungsniveau des Zwischenkreises liegt.

8. Antriebssystem nach Anspruch 7, wobei wenigstens ein Verbraucher (16) aus dem Zwischenkreis mit elektrischer Energie auf dem erhöhten Spannungsniveau versorgt wird, und dieser Verbraucher (16), wenn die elektrische Maschine (3) aufgrund Leerlaufdrehzahlkonstanthaltung vorübergehend weniger oder keine elektrische Energie liefert, wenigstens teilweise aus dem auf dem erhöhten Spannungsniveau liegenden Energiespeicher (12, 19) gespeist wird, und wobei im Fall einer vorübergehend antreibenden Wirkung der elektrischen Maschine (3) zwecks Leerlaufkonstanthaltung diese wenigstens teilweise aus dem auf dem erhöhten Spannungsniveau liegenden Energiespeicher (12, 19) gespeist wird.

## Claims

1. A drive system, especially for a motor vehicle, having
- an internal combustion engine (1);
- at least one electric three-phase machine (3), which can apply a braking and driving torque to the internal combustion engine (1); and
- an inverter (11) to feed the electric machine (1), which comprises an intermediate circuit having an increased voltage level in comparison with an electrical system, and
- a control (21), which firstly initiates a corresponding increase in the torque of the internal combustion engine (1) upon an engagement of a mechanical load during the idling of the internal combustion engine, and, secondly, until this intervention of the internal combustion engine becomes effective, controls the electric machine (3) so that it temporarily applies less braking or driving torque so that the idling speed remains largely constant.

2. A drive system according to Claim 1, in which the control is a disturbance variable compensated closed-loop control.

3. A drive system according to Claim 2, in which loads represent disturbance variables.

4. A drive system according to one of the preceding Claims, in which the internal combustion engine (1) is operated at optimal ignition point in idling operation.

5. A drive system according to one of the preceding Claims, in which the control (21, 23) of the electric machine (23) and/or of the internal combustion engine (1) acquires information from a sensor (22) that detects the speed of the internal combustion engine (1).

6. A drive system according to one of the preceding Claims, in which the control (21, 23) of the electric machine (3) and/or of the internal combustion engine (1) acquires information from a sensor that can detect load changes.

7. A drive system according to one of the preceding Claims, having at least one energy accumulator (12, 19) that lies at the increased voltage level of the intermediate circuit.

8. A drive system according to Claims 7, in which at least one consumer (16) is supplied from the intermediate circuit with electrical energy at the increased voltage level and this consumer (16), when the electric machine (3) temporarily delivers less or no electrical energy because the idling speed is kept constant, is at least partially fed from the energy storage devices (12, 19) lying at the increased voltage level, and in which, in the event of a temporary driving action of the electric machine (3) for the purpose of keeping idling speed constant, this is fed, at least partially, from the energy storage devices (12, 19) lying at the increased voltage level.

## Revendications

1. Système de propulsion, en particulier pour un véhicule automobile, comprenant :
- un moteur à combustion interne (1),
- au moins une machine électrique (3) à courant triphasé qui peut solliciter le moteur à combustion interne (1) avec un couple retardateur et de propulsion ;
- un onduleur (11) servant à alimenter la machine électrique (3), lequel onduleur comprend un circuit intermédiaire ayant un niveau de tension élevé par rapport à un réseau de bord, et
- une commande (21) qui, lors d'une compensation d'une charge mécanique du ralenti du moteur à combustion interne (1), d'une part introduit une augmentation correspondante du couple du moteur à combustion interne (1) et, d'autre part, jusqu'à ce que cette intervention du moteur à combustion interne soit efficace, commande la machine électrique (3) de façon telle, qu'elle applique temporairement un couple retardateur ou de propulsion plus faible, de sorte que le régime de ralenti reste constant dans une large mesure.

2. Système de propulsion selon la revendication 1, dans lequel la commande est un réglage à perturbations compensées.

3. Système de propulsion selon la revendication 2, dans lequel des charges représentent des perturbations.

4. Système de propulsion selon l'une quelconque des revendications précédentes, dans lequel le moteur à combustion interne (1) est actionné au moment du point d'allumage optimal lors du fonctionnement au ralenti.

5. Système de propulsion selon Tune quelconque des revendications précédentes, dans lequel la commande (21, 23) de la machine électrique (3) et/ou du moteur à combustion interne (1) reçoit une information d'un capteur (22) qui détecte le régime du moteur à combustion interne (1).

6. Système de propulsion selon Tune quelconque des revendications précédentes, dans lequel la commande (21, 23) de la machine électrique (3) et/ou du moteur à combustion interne (1) reçoit une information d'un capteur qui peut détecter des modifications de charge.

7. Système de propulsion selon Tune quelconque des revendications précédentes, comprenant au moins un accumulateur d'énergie (12, 19) qui se trouve au niveau de tension élevé du circuit intermédiaire.

8. Système de propulsion selon la revendication 7, où au moins un récepteur (16) est alimenté, au niveau de tension élevé, en énergie électrique fournie par le circuit intermédiaire, et ce récepteur (16), lorsque la machine électrique (3), temporairement, ne fournit aucune énergie électrique ou qu'elle en fournit moins, en raison du maintien du régime de ralenti à un niveau constant, est alimenté au moins partiellement par l'accumulateur d'énergie (12, 19) se trouvant au niveau de tension élevé, et où, en cas d'effet d'entraînement de la machine électrique (3) se produisant temporairement, ce récepteur est alimenté au moins partiellement par l'accumulateur d'énergie (12, 19) se trouvant au niveau de tension élevé, en vue du maintien du ralenti à un niveau constant.
